# EUROPEAN PATENT APPLICATION

(11) **EP 2 302 128 A1**
(43) Date of publication of application: **30.03.2011**
(21) Application number: 09171168.9
(22) Date of filing: 24.09.2009
(51) Int. Cl.: D06F 39/14, B29C 45/00

(54) **Door for a laundry dryer, method of manufacturing such door and method of operating such door**

(71) Applicant: BSH Bosch und Siemens Hausgeräte GmbH, 81739 München (DE)
(72) Inventor: Wezyk, Pawel, 91-829 Lodz (PL)

(57) **Abstract**

The present invention relates to a door 18 for a laundry dryer 1, which door 18 comprises a plastic door frame 19 and a plastic see-through element 20, wherein the plastic door frame 19 and the plastic see-through element 20 comprise different plastic base materials. The inventive method intended for manufacturing a door 18 which comprises a plastic door frame 19 and a plastic see-through element 20, wherein the plastic door frame 19 and the plastic see-through element 20 comprise different plastic base materials, provides that the plastic door frame 19 and the plastic see-through element 20 are manufactured by a bi-injection moulding process. The inventive method for operating a door 18 comprises the following steps: illuminating the plastic see-through element 20 in a first colour during a drying process and in a second colour having finished the drying process.

## Description

The invention relates to a door for a laundry dryer, the door comprising a plastic door frame and a plastic see-through element, wherein the plastic door frame and the plastic see-through element comprise different plastic base materials. The invention further relates to a method of manufacturing a door for a laundry dryer, the door comprising a plastic door frame and a plastic see-through element, wherein the plastic door frame and the plastic see-through element comprise different plastic base materials. The invention also relates to a method of operating such door.

GB 2 237 293 A discloses a window for an electric household appliance, which window comprises a transparent glass or plastic cup-shaped element (see-through element) having a substantially hemispherical shape, and a frame element consisting of a single piece of thermoplastic material applied astride a peripheral edge of said cup-shaped element. The frame may be moulded in place or moulded before being applied to the cup-shaped element. The frame element can be directly moulded astride a peripheral edge of the cup-shaped element, or the frame unit can be separately moulded and applied to the edge of the cup-shaped element at a later time. The transparent cup-shaped element may be made from transparent plastic materials, such as polycarbonate. In order to prepare the frame unit, styrene alloys such as ABS, SAN, and so forth, or polycarbonates may be used. It is the disadvantage of this window that the moulding process is still rather complex and costly.

EP 1 474 558 B1 discloses a door for a top-loading washing machine and a method for manufacturing the same. The door comprises: A body (frame) designed to open or close an opening for introducing laundry into a tub; a transparent part (see-through element) formed at least at a part of the body for having a view of an inside of the tub; wherein a first layer of a hydrophilic material is arranged on an inside surface of the transparent part. The body is formed of a plastic, and the transparent part is formed of a transparent plastic. In particular, the body of the door is formed to include the transparent part, at least partly. As described before, the door body is formed of ABS (Acrylonitrile Butadiene Styrene) plastic or PC (Polycarbonate) resin by injection moulding. By injection moulding the transparent resin and the non-transparent resin at the same time, the transparent part can be formed as a part of the body. Preferably, the body may be formed fully of transparent material. In other words, the door may comprise the door body and the transparent part may be made from the same plastic base material. While the plastic base material of the door body may comprise additions to make it impervious to light, the plastic base material of the transparent part comprises no such additions. It is the disadvantage of this door that the provision of only one plastic base material limits its applicability, in particular with respect to mechanical stability and reliability.

It is an object of the present invention to provide a door for a laundry dryer that is applicable for a wide range of dryers, in particular mechanically endurable and reliable, and that is further easy to manufacture. The object also includes providing a method to manufacture such door, and a method to operate such door.

The object is achieved according to the features of the independent claims. Preferred embodiments can be derived, inter alia, from the dependent claims and the subsequent disclosure.

The object is achieved by a door for a laundry dryer, the door comprising a plastic door frame and a plastic see-through element, wherein the plastic door frame and the plastic see-through element comprise different plastic base materials. The plastic door frame and the plastic see-through element have been manufactured by a bi-injection moulding process.

This door has the advantage that it can be manufactured very easily in one moulding step and does not need to comprise a pre-manufacture of the frame or the see-through element. Also, the bi-injection moulding allows for the simultaneous injection of two plastic materials of different plastic base material. The different plastic base materials may have different material characteristics, in particular mechanical characteristics. This ensures that the door can be adapted to a wide range of mechanical conditions.

Bi-injection moulding can be described as a process in which two different plastic materials are simultaneously injected at different locations in the same mould. As the plastic materials flow into the mould, they bond along a common interface.

In accordance with a preferred embodiment of the invention, the laundry dryer is a tumble dryer.

It is one preferred embodiment that the plastic base material of the plastic door frame comprises material essentially consisting of ABS (co-polymer formed from acrylonitrile, butadiene, and styrene) or PC-ABS (polycarbonate combined with ABS). An advantage of ABS is that this material combines the strength and rigidity of the acrylonitrile and styrene polymers with the toughness of the polybutadiene rubber. Very important mechanical properties of ABS are resistance and toughness. A variety of modifications can be made to improve impact resistance, toughness, and heat resistance. The impact resistance can be amplified by increasing the proportions of polybutadiene in relation to styrene and also acrylonitrile. Also, stability under load is excellent with limited loads. ABS polymers are resistant to aqueous acids, alkalis, concentrated hydrochloric and phosphoric acids, alcohols and animal, vegetable oils, and mineral oils.

It is another preferred embodiment that the plastic base material of the see-through element comprises material essentially consisting of PC (polycarbonate). PC is easily worked, moulded, and thermoformed; PC is also temperature resistant and impact resistant. IN addition, PC material having an excellent transparency for visible light is available for use in the inventive door.

It is still another preferred embodiment that the different plastic base materials are bonded at a side rim of the see-through element. Thus, the bonding areas are not easily visible from the outside.

It is yet another preferred embodiment that the door further comprises a plastic front cover. Incorporation of the plastic front cover will further enhance the excellent thermal insulation provided by plastic which substitutes a prior art see-through element made from glass.

It is even another preferred embodiment that the door further comprises at least a hook, a hinge and/or a design ring with a handle, wherein the hook, the hinge and/or the design ring are partially moulded into the plastic door frame. By this means, a separate step of joining these elements with the door can be avoided.

It is yet another preferred embodiment that the door further comprises at least one light source, in particular light emitting diode, to illuminate at least the plastic see-through element. This may give a widely visible optical impression that may be used to inform or alert the user about a condition of the dryer.

It is a particularly preferred embodiment that the at least one light source is adapted to change its colour. Thus, a colour can be chosen by a user according to his or her wishes, or a colour or a colour variation may indicate a certain status or operating condition of the dryer.

The at least one light source is connected to a control unit (not shown) wherein the control unit is adapted to control a colour of the at least one light source depending on an operating status of the laundry dryer.

It is yet another particularly preferred embodiment that the see-through element comprises at least one surface area visible from the outside of the laundry dryer, wherein the surface area provides an increased and / or reduced light emission.

In the context of the preferred embodiment defined immediately above, an embodiment which is further preferred is **characterized in that** said surface area is defined by a marking element moulded into the plastic see-through element during the bi-injection moulding process. The marking element may be provided as a foil or sheet which may carry some information, in particular a trademark or logo, possibly in the form of a print or surface structure, and it may be incorporated into the mould used prior to the bi-injection moulding process.

It is also a preferred embodiment that the door is a side door.

It is a further preferred embodiment that the laundry dryer is a refresher dryer, i.e. a dryer that has the capability to fill its drum with steam to refresh and/or de-wrinkle the clothes or laundry.

The object is also achieved by a laundry dryer comprising the above mentioned door.

The object is also achieved by a method of manufacturing a door for a laundry dryer, the door comprising a plastic door frame and a plastic see-through element, wherein the plastic door frame and the plastic see-through element comprise different plastic base materials, wherein the plastic door frame and the plastic see-through element are manufactured by a bi-injection moulding process.

The object is also achieved by a method of operating a door, the method comprising the following steps: Illuminating the plastic see-through element in a first colour, in particular the colour red, during a drying process; and illuminating the plastic see-through element in a second colour, in particular the colour green, having finished the drying process. This gives an intuitive colour coding of at least these two operating conditions.

It is one preferred embodiment that the method further comprises the following step: Illuminating the plastic see-through element in a time-varying manner in case of an abnormal operating condition. This also gives an intuitive way to alert a user.

In the following sections, particularly preferred embodiments of the invention are described in greater detail, including references to the Figures of the attached drawing. In particular:
- Fig.1: shows an oblique view onto a refresher dryer comprising a steam generator;
- Fig.2: shows a side view of a door for the refresher dryer of Fig.1; and
- Fig.3: shows an exploded side view of a door frame and a see-through part of the door of Fig.2.

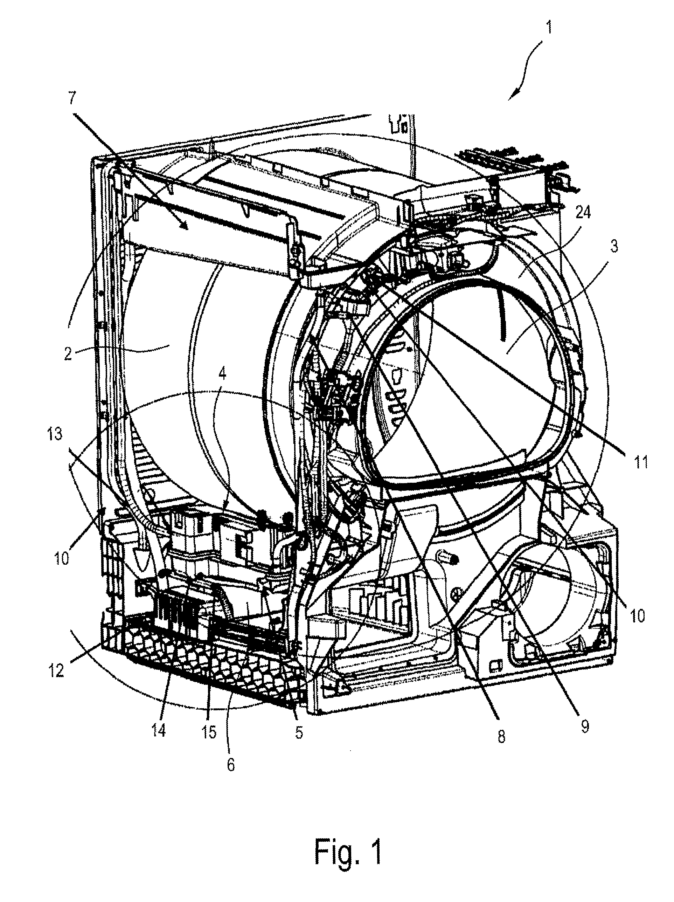

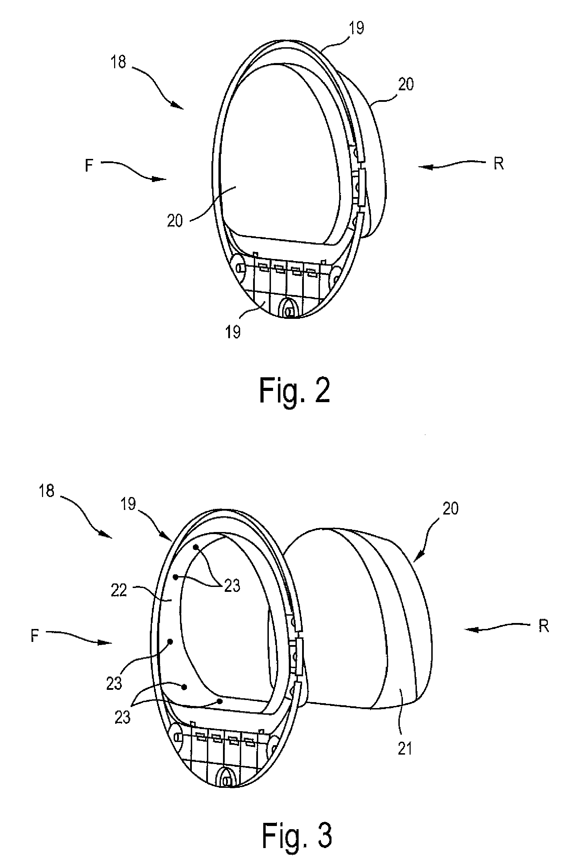

**Fig.1** shows a refresher dryer 1 that is a laundry dryer that incorporates a clothes or laundry refreshing and de-wrinkling function applying steam to the clothes. The refresher dryer 1 is shown without housing. In particular, the refresher dryer 1 is embodied as a tumble dryer comprising a rotatable drum 2 which holds the clothes to be dried and which may be operated by being rotated in reversing rotational directions. The drum 2 can be loaded and unloaded through an opening 3. The opening 3 is typically closed by a door (further described in Fig.2 and Fig.3). The operation of a tumble dryer as such is well known.

To implement the refreshing function, the refresher dryer 1 comprises a steam generator 4 which is located at a bottom of the refresher dryer 1 and mounted on top of a cover 5 of a heat exchanger 6 and of which a front side F (see also Fig.2) is visible. The steam generator 4 is used to generate steam from water. Water is supplied to the steam generator 4 via a condensate container shell 7 through a flexible filling hose 8. The water supplied to the steam generator 4 is thus the condensate that is extracted from the damp clothes during the drying process. The condensate container shell 7 may additionally be filled by fresh water, e.g. at the beginning of a drying cycle, if there is not yet enough condensate to supply the steam generator 4.

The output generated by the steam generator 4 usually contains a mixture of steam and hot water and is led to a steam separator 9. The steam separator separates the steam from the hot water. The steam is fed into the drum 2 via a hose 10 that leads to a nozzle 11. The nozzle 11 opens into the drum 2 and may inject the steam directly onto the clothes or laundry. To this end, the nozzle 11 may have a shape, e.g. angular shape that allows orientation of the steam flow. The hot water is returned to a T-connector 12 located in a dryer pump reservoir via a flexible hot water return hose. Thus, the steam separator 9 ensures that only steam with a low or very low liquid content is fed into the drum 2. The steam separator 9 and the nozzle 11 are attached to a bearing shield 24 of the refresher dryer 1.

The steam generator 4 further comprises or is connected to a flexible de-aeration hose 13 that connects to a water tank (see fig.3 for further detail) of the steam generator 4. The steam generator 4 further comprises a siphon fixation 14 for holding or fixing a siphon 15.

**Fig. 2** shows a side view of a door 18 for closing the opening 3 of Fig.1, F denoting a front side and R denoting a rear side R of the door 18. **Fig.** 3 shows the same door 18 as an exploded view. The door 18 comprises a plastic door frame 19 and a plastic see-through element 20. While the plastic door frame 19 is made from ABS or PC-ABS with the addition of a colorant, the plastic see-through element 20 is from transparent PC. The plastic door frame 19 and the plastic see-through element 20 have been integrally moulded by a bi-injection moulding process. The bonding area(s) is/are at the interface of a side rim 21 of the see-through element 20 and a side rim 22 of the door frame 19.

If a front cover (not shown) covers the front side F of the door frame 19, this front cover may also be manufactured by an injection moulding process.

The door 18 may comprise at least a hook, a hinge and/or a design ring with a handle. The hook, the hinge and/or the design ring may partially be moulded into the door frame 19, for example.

The door 18 further comprises several light sources in form of light emitting diodes 23 to illuminate the see-through element 20. The light emitting diodes 23 may be of the same colour (i.e. emitting light of the same colour) or may be of different colours. If the light emitting diodes 23 are of the same colour, they may be of a fixed colour or may change their colour. If the light emitting diodes 23 are of different colours, they may be represented by a respective LED cluster having LED chips of different colour mounted on a common substrate. If the light emitting diodes 23 are of different colours, at least two light emitting diodes may emit light into a common light fibre. The light emitting diodes 23 and/or the common light fibre emit their light out of the side rim 22 of the door frame 19 and thus into the side rim 21 of the see-through element 20. The operation of the light emitting diodes 23 (on/off, colour etc.) is controlled by a control unit (not shown) wherein the control unit is adapted to control a colour of light emitting diodes 23 depending on an operating status of the laundry dryer 1.

For example, the light emitting diodes 23 may illuminate the see-through element 20 in a first colour, e.g. red, if the laundry dryer 1 is processing, e.g. drying, the clothes. The light emitting diodes 23 may illuminate the see-through element 20 in a second colour, e.g. green, if the laundry dryer 1 is not processing the clothes, e.g. before starting a drying program or after having finished processing the clothes / when the clothes may be extracted.

Independently of the colour, the light emitting diodes 23 may illuminate the see-through element 20 in a variable manner, e.g. in intervals, if an abnormal condition is present, e.g. the door 18 has not been closed or a fault (no water etc) has occurred.

Furthermore, the see-through element 20 comprises a surface area (not shown) visible from the outside, in particular front side F, of the laundry dryer 1, wherein the surface area provides a logo that has an increased light emission as compared to its surrounding area. The surface area featuring the logo is defined by a marking element moulded into the plastic see-through element during the bi-injection moulding process. The marking element is provided as a foil or sheet which carries the information to be displayed, in particular the said logo, in the form of a print or surface structure, and it is incorporated into the mould used prior to the bi-injection moulding process.

The door 18 is a side door / door of a side loading dryer.

Of course, the invention is not restricted to the embodiments shown.

### List of Reference Numerals

- 1: refresher dryer
- 2: drum
- 3: opening
- 4: steam generator
- 5: cover
- 6: heat exchanger
- 7: container shell
- 8: filling hose
- 9: steam separator
- 10: hose
- 11: nozzle
- 12: T-connector
- 13: de-aeration hose
- 14: siphon fixation
- 15: siphon
- 18: door
- 19: door frame
- 20: see-through element
- 21: side rim
- 22: side rim
- 23: light emitting diodes
- 24: bearing shield
- F: front side
- R: rear side

## Claims

1. A door (18) for a laundry dryer (1), the door (18) comprising a plastic door frame (19) and a plastic see-through element (20), wherein the plastic door frame (19) and the plastic see-through element (20) comprise different plastic base materials, **characterized in that** the plastic door frame (19) and the plastic see-through element (20) have been manufactured by a bi-injection moulding process.

2. The door (18) according to claim 1, **characterized in that** the plastic base material of the plastic door frame (19) comprises material essentially consisting of ABS or PC-ABS.

3. The door (18) according to any of the preceding claims, **characterized in that** plastic base material of the see-through element (20) comprises material essentially consisting of PC.

4. The door (18) according to any of the preceding claims, **characterized in that** the different plastic base materials are bonded to each other at a side rim of the see-through element (20).

5. The door (18) according to any of the preceding claims, **characterized in that** the door further comprises a plastic front cover.

6. The door (18) according to any of the preceding claims, **characterized in that** the door further comprises at least a hook, a hinge and/or a design ring with a handle, wherein the hook, the hinge and/or the design ring are partially moulded into the plastic door frame (19).

7. The door (18) according to any of the preceding claims, **characterized in that** the door further comprises at least one light source (23), in particular light emitting diode (23), to illuminate at least the plastic see-through element.

8. The door (18) according to claim 7, **characterized in that** the at least one light source (23) is adapted to change its colour.

9. The door (18) according to claim 8, **characterized in that** the at least one light source (23) is connected to a control unit wherein the control unit is adapted to control a colour of the at least one light source (23) depending on an operating status of the laundry dryer (1).

10. The door (18) according to any of the claims 7 to 9, **characterized in that** the see-through element (20) comprises at least one surface area visible from the outside of the laundry dryer (1), wherein the surface area provides an increased and / or reduced light emission.

11. The door (18) according to claim 10, **characterized in that** said surface area is defined by a marking element moulded into the plastic see-through element (20) during the bi-injection moulding process.

12. The door (18) according to any of the preceding claims, **characterized in that** the door (18) is a side door.

13. The door (18) according to any of the preceding claims, **characterized in that** the laundry dryer (1) is a refresher dryer (1).

14. A method of manufacturing a door (18) for a laundry dryer (1), the door (18) comprising a plastic door frame (19) and a plastic see-through element (20), wherein the plastic door frame (19) and the plastic see-through element (20) comprise a different plastic base material, **characterized in that** the plastic door frame (19) and the plastic see-through element (20) are manufactured by a bi-injection moulding process.

15. A method of operating a door (18) according to claim 14, **characterized in that** the method comprising the following steps: illuminating the plastic see-through element (20) in a first colour, in particular the colour red, during a drying process; and illuminating the plastic see-through element (20) in a second colour, in particular the colour green, having finished the drying process.

16. The method according to claim 15, the method comprising the following step: illuminating the plastic see-through element (20) in a time-varying manner in case of an abnormal operating condition.
